# EUROPEAN PATENT APPLICATION

(11) **EP 3 051 030 A2**
(43) Date of publication of application: **03.08.2016**
(21) Application number: 16150053.3
(22) Date of filing: 04.01.2016
(51) Int. Cl.: E02F 3/02, F16L 11/00, E02F 5/10, F16L 1/00, H02G 1/06, E02F 5/12, E02F 5/02, E02F 5/14

(54) **APPARATUS FOR BURYING CABLES, PIPES AND THE LIKE, AND OPERATING METHOD THEREOF**

(30) Priority: 09.01.2015 IT RM20150010
(71) Applicant: EMEC S.R.L., 00025 Gerano (RM) (IT)
(72) Inventor: CASTELMANI, Franco, 00025 Gerano (RM) (IT)
(74) Representative: Iannone, Carlo Luigi

(57) **Abstract**

The present invention concerns an apparatus (1) for burying a cable, a pipe, a drip line (P) and the like, comprising a frame (2), a handlebar (3), for controlling the direction of said apparatus (1), coupled to said frame (2), traction means (4), for moving said apparatus along an advancement direction, arranged on said frame (2), a cable burying group (5), capable to realize a groove (S) in the ground and place in it said cable, pipe, drip line (P) and the like, and a reduction group (6), operatively connected with said handlebar (3) and with traction wheels (42), said reduction group (6) being configured to transmit selectively by control the motion of said traction means (4) to said traction wheels (42), so as to advance rectilinearly said apparatus (1) or to allow said apparatus (1) to steer.

The present invention also concerns a method for tracing a groove (S) and burying a cable, a pipe, a drip line (P) and the like.

## Description

The present invention relates to an apparatus for burying cables, pipes and the like, and operating method thereof.

More specifically, the invention concerns an apparatus of the above kind, studied and realized in particular to allow a high maneuverability in burying phases of cables, pipes and the like.

In the following, the description will be directed to bury cables, pipes or gardens and farmlands dripline, but it is clear that the same should not be considered limited to this specific use.

As it is well known in agriculture or in gardening it is often necessary to bury cables or pipes. To do this operation, in general, a groove must be excavated in the ground, to place the cable or pipe to be buried in the bottom of said groove and to replace the removed material for covering the open groove.

Currently there are different equipments or machines for such operations.

The main machineries or apparatuses according to the prior art use several technical features, such as end mills, vibrating blades and catenaries, driven by means that have significant masses, so as to prevent the movement in small spaces and therefore not always suitable for the above needs.

The solution according to the invention overcomes the limitations of the prior art, by means of the combination of the cutting system and of the cable or drip line insertion system, associated to the high maneuverability, that make the system under examination, an extremely valid and innovative system.

An apparatus according to the prior art is that described by the Applicant in European patent application nr. EP2084796A, comprising wedge-shaped elements, adapted to allow, by virtue of their shape, the realization of the groove, in which the cable or the pipe can be inserted, compressing the soil in equal parts on the sides of the groove, so as to make the groove easily covered to insert the pipe or drip line, not presenting waste material.

The devices according to the prior art described above also have the problem of being invasive, as well as little maneuverable, in particular when the track of the groove to be carried out, in which burying the cable, is in the proximity of walls, hedge or similar encumbrances.

In fact, said equipments according to the prior art, for example, do not allow the operator to rotate on itself, compensating the overall dimensions of the body and of the control members, in the maneuvers where realizing an angle with respect to a track arranged in proximity, for example, of a wall or a hedge is necessary.

In particular, when an apparatus carries out a straight track parallel to, and in proximity of a wall, in case of said track has to follow the other side of the wall or hedge, said apparatus has to move away from the corner, realizing a wide curve, thus not fulfilling the need. In fact, the device for realizing the groove would rotate around the device for the realization of the same groove, and, on the one hand, the operator, with its encumbrance, would prevent such rotation, while, on the other hand, the operator itself would not be able to provide the thrust force to the apparatus. Therefore, with the equipment according to the prior art, it is necessary to perform curved tracks.

A further problem of the apparatuses according to the prior art is to not allow burying cables, when the track to follow overlaps or crosses with itself (i.e. forms an "X"), without stopping the burying activities. In fact, the apparatuses according to the prior art are likely to shear the previously buried cable. Therefore, they must be stopped and often it is necessary to make manually the part of the groove which overlaps.

It seems evident that the apparatuses according to the prior art have problems in terms of flexibility in designing the tracks for burying cables.

In light of the above, it is, therefore, object of the present invention providing an apparatus that can be easily maneuvered and can allow burying cables according to any kind of track.

A further object of the present invention is to allow burying cables with tracks that can also cross each other, without interrupting the burying process.

It is also object of the present invention to provide an apparatus suitable for burying drip lines within the ground.

It is therefore object of the present invention an apparatus for burying a cable, a pipe, a drip line and the like, comprising a frame, a handlebar, for controlling the direction of said apparatus, coupled to said frame, traction means, for moving said apparatus along an advancement direction, arranged on said frame, a cable burying group, capable to realize a groove in the ground and place in it said cable, pipe, drip line and the like, and a reduction group, operatively connected with said handlebar and with traction wheels, said reduction group being configured to transmit selectively by control the motion of said traction means to said traction wheels, so as to advance rectilinearly said apparatus or to allow said apparatus to steer.

Always according to the invention, said reduction group could comprise a gear worm screw mechanically connected with said traction means, and a first and a second drive shaft, each connectable to said gear worm screw through a respective coupling bush, each one of said drive shafts being coupled with a respective drive wheel, said gear worm screw being configured to transmit by control the motion of said motor to both said drive shafts or selectively to one of them.

Still according to the invention, said handlebar could be configured so as to oscillate or rotate to the right or to the left, and said reduction group could comprise a main spring, having one end fixed to a main tie rod operable by means of a lever arranged on said handlebar, said main tie rod having a guide sheath, a left switch, slidably movable with respect to said upper base and fixed, preferably by means of a sleeve, to said first drive shaft, said left switch being fixed to one end of said main spring, a left tie rod, operable upon rotation to the left of said handlebar, a left secondary spring, having one end fixed to said gear worm screw, and the other end fixed to said left switch, a right switch slidably movable with respect to said upper base and fixed to said drive shaft, preferably by means of a sleeve, said right switch comprising a right tie rod, operable upon rotation to the right of said handlebar, said right switch being fixed to said guide sheath of said main tie rod, and a right secondary spring, having one end fixed to said gear worm screw and the other end fixed to said right switch.

Further according to the invention, said apparatus could comprise a rocker arm, associated with said handlebar, which is connected with said left tie rod and said right tie rod, such that when said handlebar is rotated to the left, said left tie rod is pulled, and when said handlebar is rotated to the right, said right tie rod is pulled.

Advantageously according to the invention, said handlebar could comprise a base, rotatably coupled with said frame by means of a first toothed adjusting nut, provided with respective locking/unlocking means, for horizontally adjusting and fixing the position of the handlebar with respect to the frame.

Always according to the invention, said handlebar could comprise a second toothed adjusting nut, provided with respective locking/unlocking means, for vertically adjusting and fixing the position of said the handlebar with respect to said frame.

Still according to the invention, said cable burying group could comprise a pair of wedges, adapted to perform a vertical oscillating motion by means of a respective mechanical group, a telescopic guide, in which said cable, pipe, drip line and the like flows, and a telescopic support wheel, for positioning said cable or the pipe to be buried in the bottom of the path traced by said wedges.

Further according to the invention, said wedges could have a progressive profile and each one has a lower tooth, so as to allow optimum penetration in the agricultural land, in particular for the application of a drip line.

Advantageously according to the invention, said wedges could be arranged offset with respect to said frame, close to one of said traction wheels, and said base of said handlebar could be arranged in correspondence with said wedges.

Always according to the invention, said apparatus could comprise an adjustable lever arranged close to the drive wheel closer to said wedges, capable to lift the frame with respect to said traction wheel.

It is further object of the present invention a method for tracing a groove and burying a cable, a pipe, a drip line and the like, by means of the apparatus according to anyone of claims 1-10, comprising the following steps: activating said traction means to trace a straight portion of the groove; stopping the apparatus; unlocking said handlebar and rotating it with respect to said frame as it is necessary by means of said locking/unlocking means of said first adjusting nut; restarting said traction means of the apparatus; rotating said handlebar, so as to turn said apparatus, so that the operator who controls said apparatus arranges laterally with respect to the advancement direction of said apparatus, so as to remove the rear part of said apparatus so as to enable to unlock said adjusting nut, thus placing again the handlebar in the initial position.

The present invention will be now described, for illustrative but not limitative purposes, according to its preferred embodiments, with particular reference to the figures of the enclosed drawings, wherein:
figure 1 shows a first perspective view of the apparatus for burying cables according to the present invention;
figure 2 shows a side view of the apparatus of figure 1;
figure 3 shows a rear view of the apparatus of figure 1;
figure 4 shows a bottom view of the apparatus of figure 1;
figure 5 shows a second perspective view of the apparatus for burying cables according to figure 1;
figure 6 shows a detail of the apparatus handlebar according to figure 1;
figure 7 shows a further detail of the apparatus handlebar of figure 1;
figure 8 shows a reduction group of the apparatus according to figure 1;
figure 9 shows the reduction group of figure 8 in a first operating configuration;
figure 10 shows the reduction group of figure 9 in a second operating configuration;
figure 11 shows the reduction group of figure 8 in a third operating configuration;
figure 12 shows a side view of an apparatus for burying cables according to the invention while operating;
figure 13 shows a rear perspective view of the apparatus for burying cables according to figure 12;
figures 14-18 show the apparatus for burying cables according to figure 12 during a sequence in which the apparatus buries a cable following a curved path close to a hedge.

In the various figures, similar parts will be indicated by the same reference numbers.

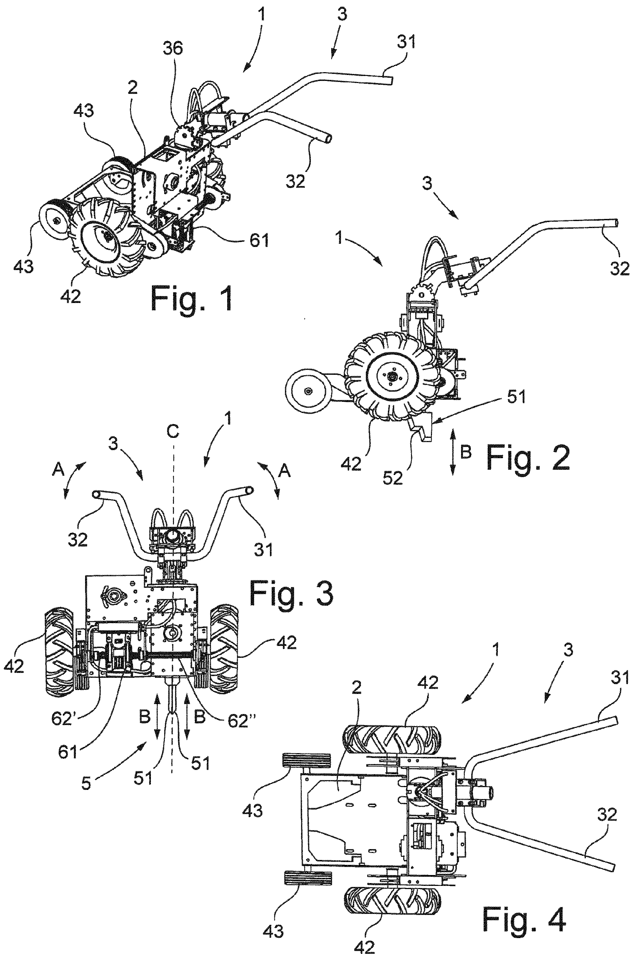

Referring to figures 1-5, it is observed an apparatus for burying cables, pipes and the like, generally indicated by the reference number 1.

The burying cables apparatus 1 essentially comprises a support frame 2, a handlebar 3, traction means 4, a cable burying group 5 and a reduction unit 6.

The frame 2 is intended to contain the parts of the apparatus 1 described below and possibly it allows to support or house a coil (not shown in the figure) of the cable to be buried.

The handlebar 3 has a pair of arms 31 and 32, on which the handles for the operator are arranged, in correspondence of which commands 33 are installed, for the control of the apparatus 1.

Said handlebar 3 can rotate or swing to the right or to the left as shown in the arrow A, by means of a rocker arm (not shown in the figures) associated to said handlebar, contained in said frame 2, as will be better described below.

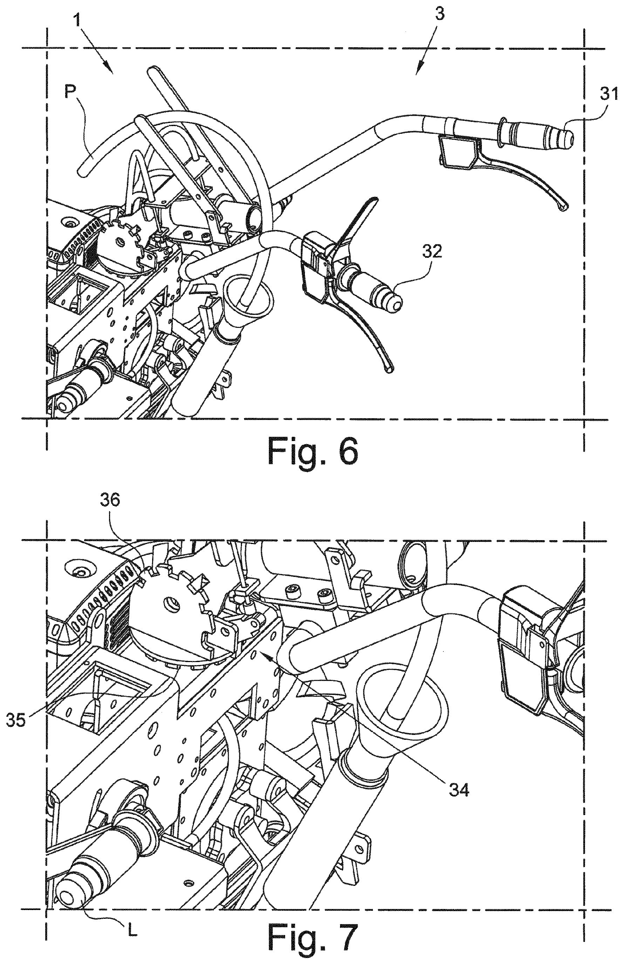

Said handlebar 3 provides (see also figure 6) a base 34, rotatably coupled with said frame 2. Said base also comprises a first toothed adjusting nut 35, provided with respective locking/unlocking means, to horizontally adjust and fix the position of the handlebar 3 with respect to the frame 2, and a second tooted adjusting nut 36, also provided with respective locking/unlocking means, to vertically adjust and fix the position of the handlebar 3 with respect to the frame 2. The function of the first adjusting nut 35 will be better described below, while the second adjusting nut 36 allows, essentially, on the one hand to adjust the handlebar 3 with respect to the height of the operator, and, on the other hand, to reduce the size of the burying cable apparatus 1, for the transport.

The traction means 4 essentially comprise a motor that can be controlled by one of the controls 33 arranged on said handlebar 3, and two traction wheels 42. The drive means 4 of the cable burying apparatus 1 also comprise front wheels 43.

The cable burying group 5 comprises a pair of wedges 51, which perform a vertical oscillatory motion, according to arrows B, by a suitable mechanical unit (not shown in the figures), so as to penetrate and move the removed soil, laterally with respect to the traced path. The reciprocating motion is taken by the motor power take through the actuation of the lever 33d arranged on the handlebar, that enable the clutch of the mechanical group. Furthermore, due to the tapered shape in the front direction of said wedges 51, the moved soil portions are limited and easily "reassemblable".

Said wedges 51 may also have a progressive profile lower tooth 52, so as to allow an optimal penetration into the soil, particularly appropriate in a drip line burying.

The wedges 51 are arranged offset with respect to the frame, i.e. they are arranged near one of the traction wheels 42, as the arrangement axis C of figure 3 shows. The function of this offset position will be better described below.

Moreover, said base 34 of said handlebar 3 is arranged in correspondence of said wedges 51, then offset with respect to said traction wheels 42.

The cable burying group 5 also includes a telescopic guide 53, through which the cable or pipe to be buried flows, and a support wheel 54, to position the cable or pipe to be buried in the bottom of the groove traced by the wedges 51.

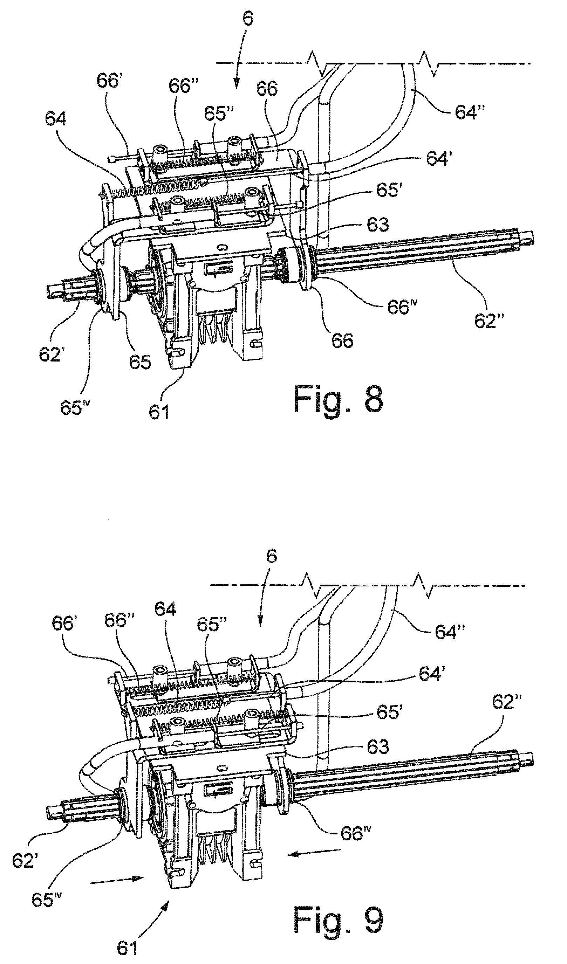

Finally, the reduction group 6 (refer to figures 8-11) comprises a gear worm screw 61, which has the function of transmitting by control the rotary motion of the motor to the two drive shafts 62' and 62", each having at one end a respective traction wheel 42, and at the other end a coupling bushing (not visible in the figures), for the engagement with said gear worm screw 61 for transmitting the driving force of the motor.

Said reduction group 6 also comprises an upper base 63, fixed on the top of said gear worm screw 61, a main spring 64, having one end fixed to a main rod 64', the latter can be actuated by means of the lever 33b arranged on said handlebar 3, a left switch 65 and a right switch 66.

Said left switch 65 is slidably movable with respect to said upper base 63 and fixed, by means of a sleeve 65^{IV}, to one of the two drive shafts 62'. Moreover, said left switch 65 comprises a left tie rod 65', operable due to the rotation of the rocker arm to the left of said handlebar 3, and a left secondary spring 65", having one end fixed to an arm fixed to said upper base 63, and the other end fixed to said left switch 65. Said main spring 64 also has the other end fixed to an arm 65"' of said left switch 65.

Said right switch 66 is also slidably movable with respect to said upper base 63 and fixed to said drive shaft 62' by means of a sleeve 66^{IV}. Said right switch 66 comprises a right tie rod 66', operable following the rotation of said rocker arm to the right of said handlebar 3, and a right secondary spring 66", having one end fixed to a bracket fixed to said upper base 63, and the other end fixed to said left switch 65. The guide sheath 64" of the main rod 64' is also fixed to an arm 66''' of said right switch 66. In this system the guide sheath 64" is not in the fixed part, as in known wire actuation mechanisms, but it is movable and referred, through said main spring 64, to said arms 65''' and 66''' of said left 65 and right 66 switches.

Said left secondary spring 65" and said right spring 66" are equal for the two switches 65 and 66.

The insertion operation of the transmission takes place by actuating said lever 33b arranged on the handlebar 3, which tensions the main spring 64. Tensioning said main spring 64 causes the sliding of the two left 65 and right 66 switches, in an independent way, in the direction of said reduction gear worm screw 61. Thus, by means of the coupling bushing, it is obtained the mechanical coupling of the two drive shafts 62' and/or 62" with the output hub (not visible in the figure) of the gear worm screw 61, till the optimal transmission and coupling between said gear worm screw 61 and said traction wheels 42. In this configuration, shown in figure 9, the reduction gear unit 6 is ready to be controlled by the oscillating rocker arm.

Said springs 65" and 66" allow to create a single and independent preload for the respective switch 65 and 66, in order to keep the respective switch 65 or 66 opened under normal conditions.

In the inserted transmission conditions, i.e. with the main spring 64 tensioned, the stroke of the main spring 64 is such as to perform an overall excursion equal to the stroke of each left 65 and right 66 switch, then twice with respect to the stroke of the secondary left 65" and right 66" springs. Each of said left 65" and right 66" secondary springs has the excursion equal to the switch 65 or 66 to which it is connected (i.e. half of the main spring 64). The oscillation of the handlebar 3 allows to pull, alternately, by said rocker arm, as said placed in correspondence of said base 34 of the handlebar 3, by said left tie rod 65' or by said right tie rod 66', to open the respective switch 65 or 66. This happens by the tie rod engaged on the switch, which sheath is in part however fixed as well as the standard.

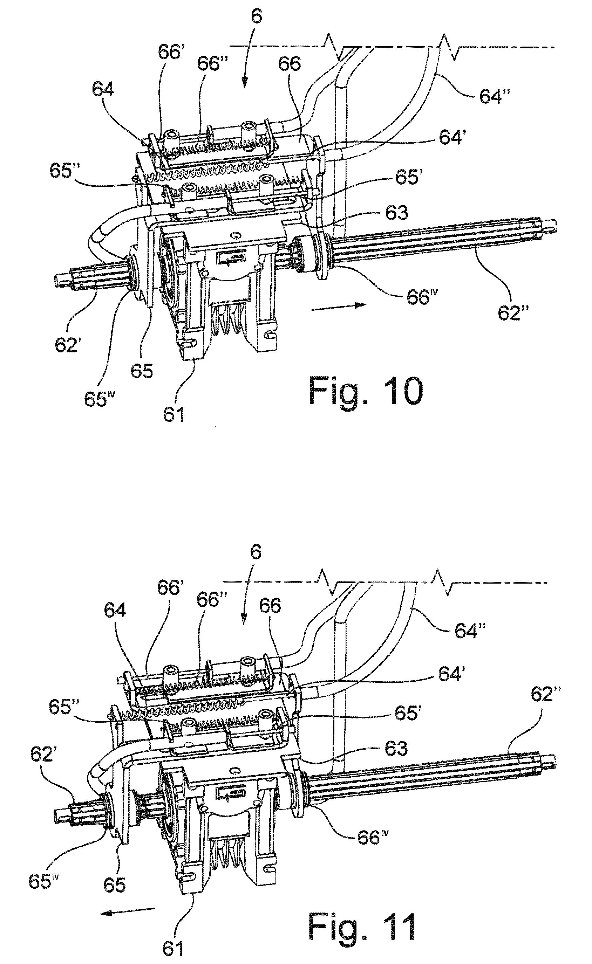

The oscillation toward a direction of the handlebar 3 opens one of the two switches 65 or 66 (see figures 10 or 11), so that the respective left 65" or right 66" spring undergoes a lengthening, while the main spring 64 reduces its tension of about a half. In this way, a release operation (i.e. away from the reduction gear worm screw 61) of a drive shaft 62' or 62" occurs, until the handlebar 3 is rotated.

When the handlebar 3 is repositioned, the tension of the tie rod 65' or 66' releases its energy, and the main spring 64 acts again, to restore the switch 65 or 66 in the respective engagement position.

Only as much as the pull loosens the lever 33b on the handlebar 3, the main spring 64 releases its tension and the secondary springs 65" and 66" relative to the two left 65 and right 66 switches re-open the respective switch.

The motion transmission from the motor to the primary axis of the gear worm screw 61 is via a V-belt (not shown in the figures), actuated by a belt tensioner always enabled by a clutch lever on the handlebar 3.

The gear worm screw 61 allows to free by request a transmission to the drive shaft 62' or 62", which transmits the motion of the drive wheel 42 of the curve it is desired to be executed, allowing the free drive wheel 42 (i.e. without traction) also to rotate in reverse, without slippage.

The operation of the burying cables apparatus 1 described above is as follows.

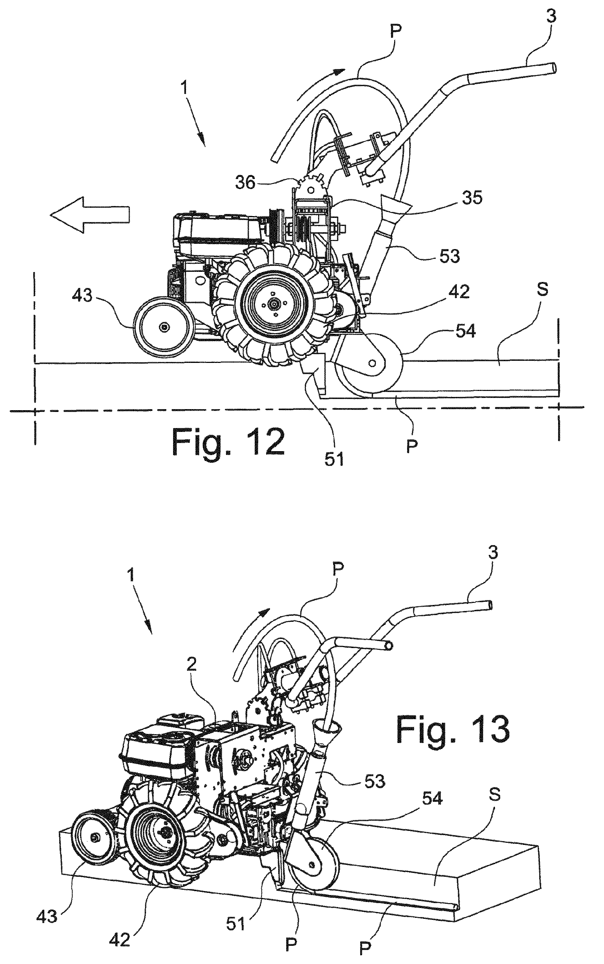

Referring to figures 12 and 13, it is observed a burying cables apparatus 1, which advances in a straight line to place, in this case, a dri pline P, in a groove S, formed in an agricultural soil.

In this configuration, the wedges 51, due to their alternate movement, track the groove in the soil, and the wheel 54 arranges the dri pline P on the bottom of said groove, by pressing it into the bottom of the groove S. Due to the motor, the operator needs not to make excessive efforts and can easily follow the track, in which burying the cable or, as in this case, the drip line P. In this configuration, by means of said lever 33b installed on the handlebar 3, the operator acts on the tie rod 64', through which it acts on the two ends of said main spring 64, which, as said, draws said left 65 and right 66 switches toward the hubs of the gear worm screw 61.

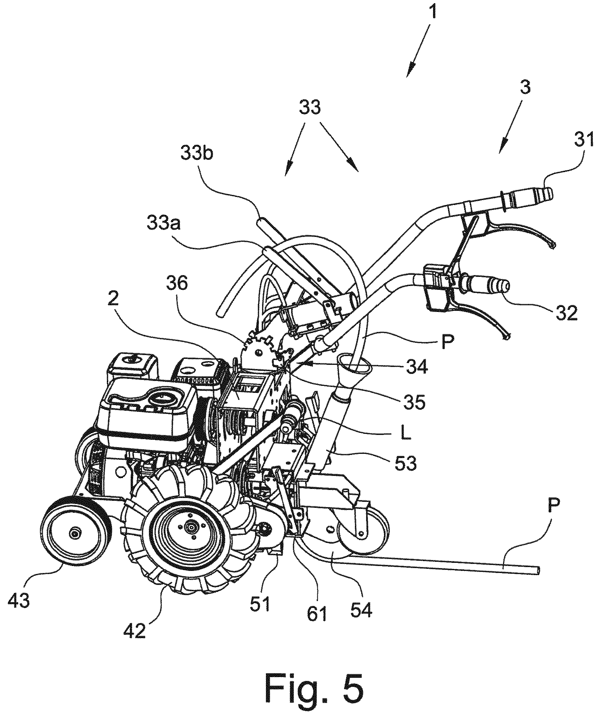

The gear worm screw 61 is provided with two pulleys of different diameters connected by a belt to the primary axis. The actuation of the lever 33a placed on the handlebar 3, tightens the velocity belt, which is selected by the change velocity switch L (see figure 5), allowing the motor to transmit power to the gear worm screw 61, and then to both drive shafts 62' and 62", connected, as said, to said traction wheels 42.

By simply rotating the handlebar 3 to the right or to left, the operator can change the direction of the apparatus 1.

In case of the groove S were arranged parallel to, and in proximity of an obstacle O, such as a wall or a hedge and it provides a track that, with a very narrow angle depart from said wall or hedge O, then, the operator could act as follows.

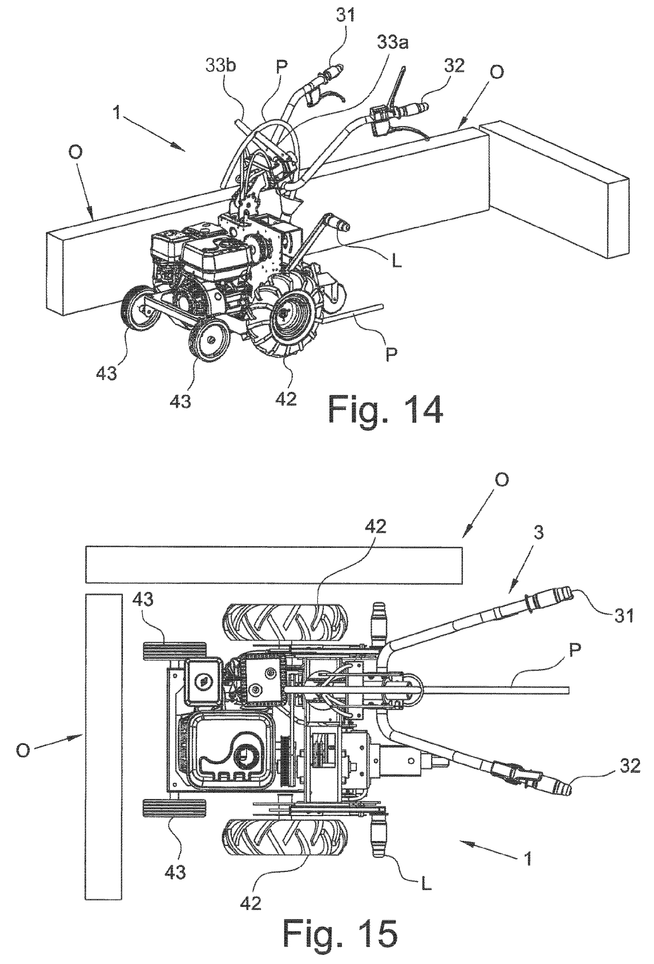

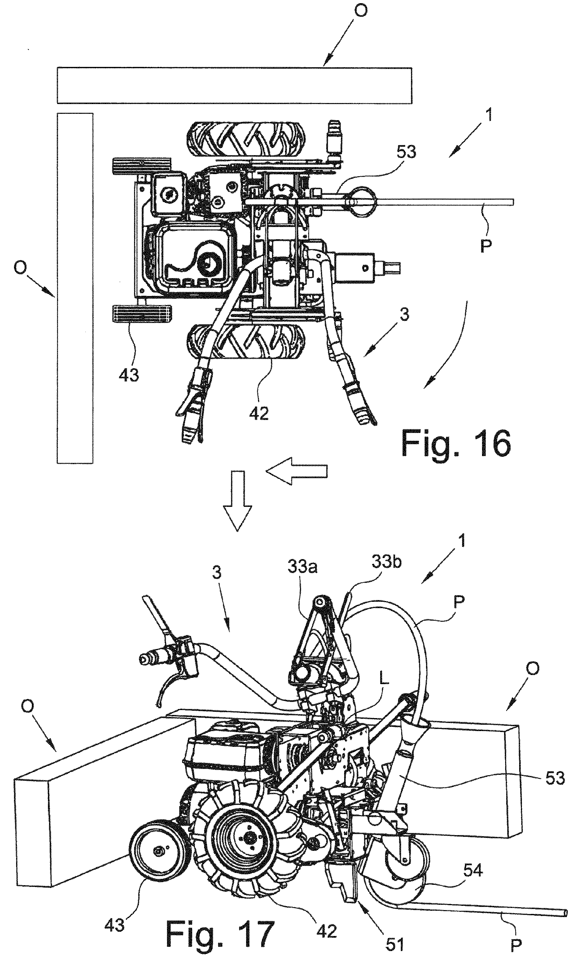

To trace the groove S parallel and in proximity of a wall or a hedge O he could proceed by placing the wheel 42 with respect to which the wedges 51 are closer. Then (see figures 14 and 15), once arrived at the point where the path of the groove S departs from said wall or a hedge O, the operator may temporarily stop the apparatus 1, act on the locking/unlocking means of said adjusting nut 35, thus unlocking said base 34 of said handlebar 3, rotate the handlebar 3 with respect to the frame 2 as necessary, as shown in figure 16, enable one of said tie rods 65' or 66' by means of the rocker arm, rotate said handlebar 3, as shown in figure 17, and again start the transmission by operating lever 33a, which in fact acts on a clutch and to turn the cable burying apparatus 1 to follow the track.

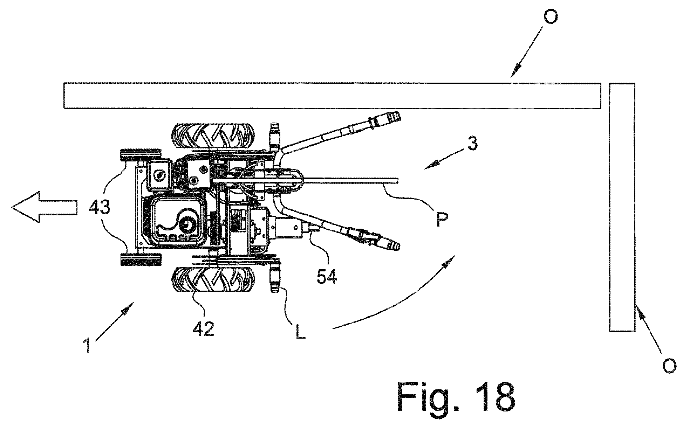

In this way the operator, in fact, is, at a short part of the track, lateral with respect to the advancement direction of the apparatus 1, just enough to distance the rear of the apparatus 1 itself, from the hedge or the wall or the like, to allow, conversely to the preceding procedure, to unlock the adjustment nut 35, thus again by placing the handlebar 3 in the initial position, as shown in figure 18.

In this way, the operator can also make right angle grooves, as, due to the possibility to rotate the handlebar 3 with respect to the frame 2 and to activate a single wheel 42, so as to turn said apparatus 1, he can avoid his encumbrance to prevent the apparatus 1 to rotate. Both the handlebar 3 axis and the wedges 51 insist on the same axis C, thus also giving to the operator the direction of burying axis.

In a further embodiment, the apparatus 1 also includes a lever (not shown in the figures) manually operable and adjustable (not shown in the figures), which acts in proximity of the wheel 42 nearest to the wedges 51, adapted to allow to lift the frame 2 with respect to said wheel 42.

In this way, in case of the track, along which were necessary burying the cable or the drip line P, crosses, to prevent the wedges 51 from damaging the cable or the drip line P already buried, the wedges 51 may realize a groove S with less depth by lifting the frame 2 with respect the wheel 42. In this way, to damage the cable or drip line P previously buried is prevented.

It is considered that the misaligned arrangement of the wedges 51, closer to one of the wheels, allows to minimize the distance between wedges and the axis of the wheel and or optimal distance between wheel axis and burying limit, which, in the case of burying of a guide wire, it is very important for the apparatus.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus (1) for burying a cable, a pipe, a drip line (P) and the like, comprising
a frame (2),
a handlebar (3), for controlling the direction of said apparatus (1), coupled to said frame (2),
traction means (4), for moving said apparatus along an advancement direction, arranged on said frame (2),
a cable burying group (5), capable to realize a groove (S) in the ground and place in it said cable, pipe, drip line (P) and the like, and
a reduction group (6), operatively connected with said handlebar (3) and with traction wheels (42), said reduction group (6) being configured to transmit selectively by control the motion of said traction means (4) to said traction wheels (42), so as to advance rectilinearly said apparatus (1) or to allow said apparatus (1) to steer.

2. Apparatus (1) according to claim 1, **characterized in that** said reduction group (6) comprises
a gear worm screw (61) mechanically connected with said traction means (4), and
a first (62') and a second (62") drive shaft, each connectable to said gear worm screw (61) through a respective coupling bush, each one of said drive shafts (62', 62") being coupled with a respective drive wheel (42),
said gear worm screw (61) being configured to transmit by control the motion of said motor to both said drive shafts (62', 62") or selectively to one of them.

3. Apparatus (1) according to claim 2, **characterized**
**in that** said handlebar (3) is configured so as to oscillate or rotate to the right or to the left, and
**in that** said reduction group (6) comprises
a main spring (64), having one end fixed to a main tie rod (64') operable by means of a lever (33b) arranged on said handlebar (3), said main tie rod (64') having a guide sheath (64"),
a left switch (65), slidably movable with respect to said upper base (63) and fixed, preferably by means of a sleeve (65^{IV}), to said first drive shaft (62'), said left switch (65) being fixed to one end of said main spring (64),
a left tie rod (65'), operable upon rotation to the left of said handlebar (3),
a left secondary spring (65"), having one end fixed to said gear worm screw (61), and the other end fixed to said left switch (65),
a right switch (66) slidably movable with respect to said upper base (63) and fixed to said drive shaft (62"), preferably by means of a sleeve (66^{IV}), said right switch (66) comprising a right tie rod (66'), operable upon rotation to the right of said handlebar (3), said right switch (66) being fixed to said guide sheath (64") of said main tie rod (64'), and
a right secondary spring (66"), having one end fixed to said gear worm screw (61) and the other end fixed to said right switch (65).

4. Apparatus (1) according to claim 3, **characterized in that** it comprises a rocker arm, associated with said handlebar (3), which is connected with said left tie rod (65') and said right tie rod (66'), such that when said handlebar (3) is rotated to the left, said left tie rod is pulled (65'), and when said handlebar (3) is rotated to the right, said right tie rod is pulled (66').

5. Apparatus (1) according to anyone of the preceding claims, **characterized in that** said handlebar (3) comprises a base (34), rotatably coupled with said frame (2) by means of a first toothed adjusting nut (35), provided with respective locking/unlocking means, for horizontally adjusting and fixing the position of the handlebar (3) with respect to the frame (2).

6. Apparatus (1) according to anyone of the preceding claims, **characterized in that** said handlebar (3) comprises a second toothed adjusting nut (36), provided with respective locking/unlocking means, for vertically adjusting and fixing the position of said the handlebar (3) with respect to said frame (2).

7. Apparatus (1) according to anyone of the preceding claims, **characterized in that** said cable burying group (5) comprises
a pair of wedges (51), adapted to perform a vertical oscillating motion by means of a respective mechanical group,
a telescopic guide (53), in which said cable, pipe, drip line (P) and the like flows, and
a telescopic support wheel (54), for positioning said cable or the pipe to be buried in the bottom of the path traced by said wedges (51).

8. Apparatus (1) according to claim 7, **characterized in that** said wedges (51) have a progressive profile and each one has a lower tooth (52), so as to allow optimum penetration in the agricultural land, in particular for the application of a drip line (P).

9. Apparatus (1) according to anyone of claims 7 or 8, **characterized**
**in that** said wedges (51) are arranged offset with respect to said frame (2), close to one of said traction wheels (42), and
**in that** said base (34) of said handlebar is arranged in correspondence with said wedges (51).

10. Apparatus (1) according to claim 9, **characterized in that** it comprises an adjustable lever arranged close to the drive wheel (42) closer to said wedges (51), capable to lift the frame (2) with respect to said traction wheel (42).

11. Method for tracing a groove (S) and burying a cable, a pipe, a dripline (P) and the like, by means of the apparatus according to anyone of claims 1-10, comprising the following steps:
- activating said traction means (4) to trace a straight portion of the groove (S);
- stopping the apparatus (1);
- unlocking said handlebar (3) and rotating it with respect to said frame (2) as it is necessary by means of said locking/unlocking means of said first adjusting nut (35);
- restarting said traction means (4) of the apparatus (1);
- rotating said handlebar (3), so as to turn said apparatus (1), so that the operator who controls said apparatus (1) arranges laterally with respect to the advancement direction of said apparatus (1), so as to remove the rear part of said apparatus (1) so as to enable to unlock said adjusting nut (35), thus placing again the handlebar (3) in the initial position.
